# EUROPÄISCHE PATENTSCHRIFT

(11) **EP 1 300 572 B1**
(45) Veröffentlichungstag und Bekanntmachung des Hinweises auf die Patenterteilung: **12.04.2006**
(21) Anmeldenummer: 02090327.4
(22) Anmeldetag: 11.09.2002
(51) Int. Cl.: F02D 41/14, F02D 41/02

(54) **Verfahren und Vorrichtung zur Steuerung einer magerlauffähigen Verbrennungskraftmaschine**
Method and device for controlling a combustion engine capable of lean running
Procédé et dispositif de commande d'un moteur pouvant fonctionner avec un mélange pauvre

(30) Priorität: 05.10.2001 DE 10152670
(43) Veröffentlichungstag der Anmeldung: 09.04.2003
(73) Patentinhaber: Volkswagen Aktiengesellschaft, 38436 Wolfsburg (DE)
(72) Erfinder: Pott, Dr. Ekkehard, 38518 Gifhorn (DE)
(74) Vertreter: Schneider, Henry

(56) Entgegenhaltungen:
- EP-A- 1 247 963
- WO-A-01/06105
- DE-A- 19 932 290

## Beschreibung

Die Erfindung betrifft ein Verfahren sowie eine Vorrichtung zur Steuerung einer magerlauffähigen Verbrennungskraftmaschine mit den Merkmalen der Oberbegriffe der unabhängigen Ansprüche 1 und 10.

Moderne, insbesondere zum Antrieb von Kraftfahrzeugen eingesetzte Verbrennungskraftmaschinen werden über möglichst große Lastbereiche, insbesondere im Niedrig- oder Teillastbereich, in einem verbrauchsgünstigen Magerbetrieb gefahren. Der Magerbetrieb ist durch Sauerstoffüberschuss eines der Verbrennungskraftmaschine zugeführten Luft-Kraftstoff-Verhältnisses, das heißt durch λ > 1, gekennzeichnet. Im Hoch- und Volllastbereich ist hingegen aufgrund der erhöhten Lastanforderung ein Betrieb der Verbrennungskraftmaschine mit einem fetten (kraftstoffreichen) oder stöchiometrischen Luft-Kraftstoff-Verhältnis (λ ≤ 1) erforderlich. Üblicherweise ist der Verbrennungskraftmaschine mindestens ein Katalysator zur Speicherung und/oder Konvertierung verschiedener Abgaskomponenten in einem Abgastrakt nachgeschaltet. 3-Wege-Katalysatoren sind in der Lage, sowohl die Oxidation von unverbrannten Kohlenwasserstoffen (HC) und von Kohlenmonoxid (CO) und gleichzeitig die Reduzierung von Stickoxiden (NOₓ) zu unterstützen. Eine vollständige Umsetzung aller Abgaskomponenten ist jedoch nur bei einem stöchiometrischen Betrieb mit λ = 1 möglich. Im verbrauchsgünstigen Magerbetrieb lässt sich aufgrund des Sauerstoffüberschusses ein Großteil der Stickoxide NOₓ 3-wegekatalytisch nicht konvertieren. Zur Abhilfe werden daher NOₓ-Speicherkatalysatoren eingesetzt, die in mageren Betriebsphasen NOₓ in Form von Nitrat speichern und in zwischengeschalteten fetten Regenerationsphasen wieder freisetzen und reduzieren. Häufig werden NOₓ-Speicherkatalysatoren auch als Hauptkatalysatoren in Kombination mit vorgeschalteten 3-Wege-Katalysatoren eingesetzt.

Ein gemeinsames Problem praktisch aller Katalysatorsysteme, insbesondere auch von NOₓ₋Speicherkatalysatoren, stellt die starke Abhängigkeit einer Speicher- und/oder Konvertierungsaktivität der Katalysatoren von der Katalysatortemperatur dar. So weisen NOₓ-Speicherkatalysatoren ein nutzbares Arbeitstemperaturfenster von etwa 200 bis 550 °C auf, in dem eine ausreichende Katalysatoraktivität vorliegt. Im Falle direkteinspritzender Ottomotoren und bei strengen gesetzlichen Abgasgrenzwerten (beispielsweise der Europäischen Abgasnorm EU IV) können NOₓ-Speicherkatalysatoren sogar nur in einem Temperaturbereich von etwa 280 bis 500 °C sinnvoll, das heißt mit einer NOₓ₋Minderungsrate von mindestens 90 %, genutzt werden. Unterhalb dieses Temperaturfensters laufen die Speicher- und Regenerationsreaktionen mit zu geringen Reaktionsgeschwindigkeiten ab, während oberhalb des Temperaturfensters die thermisch instabilen Nitrate zerfallen, so dass keine hinreichende Speicherrate vorliegt.

Herkömmlich wird daher der Magerbetrieb der Verbrennungskraftmaschine gesperrt, sobald die Katalysatortemperatur außerhalb eines durch das Arbeitstemperaturfenster des Katalysators definierten Magertemperaturbereiches liegt. Beispielsweise wird bei Fahrzeugen mit direkteinspritzenden schichtladefähigen Ottomotoren zur Einhaltung der Abgasgrenzwerte der Europäischen Abgasnorm EU III außerhalb des zulässigen Magertemperaturbereiches des NOₓ-Speicherkatalysators ein Magerbetrieb mit λ > 1,2 lediglich kurzzeitig, üblicherweise für maximal 2 s zugelassen. Ausnahmen hierfür bestehen lediglich in Schubabschaltungsphasen und/oder während einer Katalysatorheizmaßnahme innerhalb längstens 120 s nach Motorstart und/oder während einer Entschwefelung des NOₓ-Speicherkatalysators. Somit muss die Verbrennungskraftmaschine, solange der NOₓ₋Speicherkatalysator sich nicht innerhalb des Magertemperaturbereiches befindet, im stöchiometrischen oder fetten Betriebsmodus gefahren werden, auch wenn der aktuelle Betriebspunkt des Motors einen Magerbetrieb zuließe. Damit müssen erhebliche Verbrauchsnachteile zugunsten niedriger Abgasendemissionen in Kauf genommen werden.

WO 01/06105 A beschreibt ein Verfahren zur Steuerung einer magerlauffähigen Verbrennungskraftmaschine, wobei nach Überschreiten einer vorgegebenen oberen Grenztemperatur des Katalysators der Magerbetrieb der Verbrennungskraftmaschine beendet und ein fetter oder stöchiometrischer Arbeitsmodus mit λ ≤ 1 eingestellt wird. Nach Überschreiten der Grenztemperatur, das heißt im Verlauf des fetten Betriebs, wird laufend wenigstens ein Betriebsparameter, insbesondere auch eine Rohemission ausgewählter Gaskomponenten, erfasst und in Abhängigkeit dieser Betriebsparameter entschieden, ob der Verbrennungsmotor weiterhin im fetten Arbeitsmodus betrieben wird oder in den Magerbetrieb umgeschaltet wird. Da es sich bei der oberen Grenztemperatur um einen fest vorgegebenen, nicht variablen Schwellenwert handelt, erfolgt bei entsprechendem Anstieg der Katalysatortemperatur somit stets eine Umschaltung in den Fettbetrieb und nur bei Vorliegen geeigneter Betriebsparameter eine vorzeitige Rückschaltung in den Magerbetrieb.

Aufgabe der vorliegenden Erfindung ist es, ein Verfahren zur Steuerung einer magerlauffähigen Verbrennungskraftmaschine bereitzustellen, das die Aufrechterhaltung möglichst ausgedehnter Magerbetriebsphasen bei Einhaltung strenger Abgasnormen gestattet. Es soll ferner eine zur Durchführung des Verfahrens geeignete Vorrichtung zur Verfügung gestellt werden.

Diese Aufgabe wird durch ein Verfahren mit den Merkmalen des Anspruchs 1 und eine Vorrichtung nach Anspruch 10 gelöst.

Erfindungsgemäß wird eine aktuelle Rohemission mindestens einer Abgaskomponente der Verbrennungskraftmaschine ermittelt und eine obere und eine untere Grenztemperatur eines zulässigen Magertemperaturbereichs in Abhängigkeit der ermittelten, vorzugsweise streckenbezogenen Rohemission der mindestens einen Abgaskomponente bestimmt. Erfindungsgemäß wird somit der zulässige katalysatorspezifische Magertemperaturbereich nicht starr vorgegeben, sondern in

Abhängigkeit eines tatsächlichen Fahrzeugeinsatzes modifiziert. So kann nämlich, obwohl sich der Katalysator außerhalb seines Arbeitstemperaturfensters befindet, der Magerbetrieb zugelassen werden, wenn die ermittelte Rohemission etwa aufgrund eines niedrigen Lastpunktes niedrig genug ist, um vorgegebene Abgasgrenzwerte einzuhalten. Im Ergebnis wird auf diese Weise ein Anteil des Magerbetriebs an dem Gesamtbetrieb der Verbrennungskraftmaschine vergrößert und somit - bei gleichzeitiger Einhaltung vorgegebener Schadstoffendemissionen - ein Verbrauchsvorteil erzielt.

Besonders vorteilhaft kann das Verfahren für NOₓ-Speicherkatalysatoren angewendet werden, wobei dann der zulässige Magertemperaturbereich des NOₓ-Speicherkatalysators in Abhängigkeit der NOₓ-Rohemission bestimmt wird.

Es kann insbesondere vorgesehen sein, die ermittelte Rohemission mit einem vorgebbaren, üblicherweise streckenbezogenen Grenzwert zu vergleichen und bei Unterschreitung dieses Grenzwertes den zulässigen Magertemperaturbereich zu erweitern. Dabei kann die Erweiterung auch mehrstufig erfolgen. Gemäß einer weiteren vorteilhaften Ausgestaltung des Verfahrens kann bei Unterschreitung des Grenzwertes der Magerbetrieb der Verbrennungskraftmaschine sogar für beliebige Katalysatortemperaturen zugelassen werden, der Magertemperaturbereich somit praktisch unendlich erweitert werden. Dies bedeutet im Falle von NOₓ-Speicherkatalysatorsystemen, dass bei entsprechend niedrigeren NOₓ-Rohemissionen der Magerbetrieb auch dann zugelassen wird, wenn die aktuelle Katalysatortemperatur des NOₓ-Speicherkatalysators keine oder nur unzureichende Speicher- und Konvertierungsraten zulässt.

Gemäß einer weiteren Ausführung des Verfahrens kann die Bestimmung des Magertemperaturbereiches auch abhängig von der aktuellen Rohemission an unverbrannten Kohlenwasserstoffen HC und Kohlenmonoxid CO erfolgen. In diesem Fall kann der Magertemperaturbereich insbesondere in Richtung niedrigerer Katalysatortemperaturen ausgedehnt werden, wenn die Rohemissionen von CO und/oder HC unterhalb eines Grenzwertes liegen, auch wenn der Katalysator seine Anspringtemperatur (Light-off-Temperatur) noch nicht erreicht hat.

Die Grenzwerte, mit denen ein Abgleich der ermittelten Rohemissionen erfolgt, orientieren sich vorzugsweise an gesetzlich vorgegebenen Schadstoffgrenzwerten. Üblicherweise sind diese streckenbezogen, so dass im Regelfall streckenbezogene Rohemissionen ermittelt und dem hier beschriebenen Verfahren zugrunde gelegt werden.

Die Ermittlung der aktuellen Rohemissionen der mindestens einen Abgaskomponente kann prinzipiell durch Messung mittels einer stromauf des Katalysatorsystems angeordneten Gassonde erfolgen. Hinreichend genau, kostengünstiger und daher bevorzugt ist jedoch die Ermittlung einer aktuellen Rohemission in Abhängigkeit aktueller Betriebsparameter der Verbrennungskraftmaschine, insbesondere von einer Drehzahl und/oder einer Motorlast. In Abhängigkeit einer mit bekannten Mitteln erfassten aktuellen Fahrzeuggeschwindigkeit kann dann die streckenbezogene Rohemission ermittelt werden.

Es ist ferner möglich, unter Zugrundelegung konstanter Betriebsparameter des Fahrzeuges eine Hochrechnung der aktuellen Rohemission für eine vorgebbare Fahrstrecke oder ein vorgebbares Zeitintervall vorzunehmen und die hochgerechnete Rohemission mit entsprechenden Grenzwerten zu vergleichen.

Eine weitere Ausgestaltung der Erfindung sieht vor, dass im Falle einer schichtladefähigen Verbrennungskraftmaschine, die im Magerbetrieb wahlweise in einem Schichtlademodus oder einem Homogenmodus betrieben werden kann, unterschiedliche zulässige Magertemperaturbereiche für diese Magerbetriebsmodi in Abhängigkeit der ermittelten Rohemission zumindest einer Abgaskomponente bestimmt werden. Führt das Verfahren hierbei zur Freigabe beider Betriebsarten, wird wegen des niedrigeren Kraftstoffverbrauchs der magere Schichtlademodus bevorzugt. Im Schichtlademodus, der prinzipiell bei direkteinspritzenden Verbrennungskraftmaschinen realisiert werden kann, wird eine zündfähige Kraftstoffwolke lediglich im Bereich einer Zündkerze eines Zylinders erzeugt, während im übrigen Brennraum praktisch reine Luft vorliegt.

Die erfindungsgemäße Aufgabe wird ferner durch eine Vorrichtung gelöst, die durch Mittel gekennzeichnet ist, mit denen die Verfahrensschritte Ermittlung einer aktuellen Rohemission mindestens einer Abgaskomponente der Verbrennungskraftmaschine und Bestimmung des zulässigen Magertemperaturbereichs in Abhängigkeit der aktuellen Rohemission durchführbar sind. Dabei umfassen die Mittel insbesondere eine Steuereinheit, in der ein Algorithmus zur Steuerung der Verfahrensschritte in digitaler Form hinterlegt ist. Diese Steuereinheit beziehungsweise der Algorithmus kann besonders vorteilhaft in einem Motorsteuergerät der Verbrennungskraftmaschine integriert sein. Gemäß einer vorteilhaften Ausgestaltung sind ferner Mittel vorgesehen, mit denen eine aktuelle Geschwindigkeit des Fahrzeuges erfasst werden kann, um eine streckenbezogene Rohemission zu ermitteln.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: schematisch eine Verbrennungskraftmaschine mit nachgeschalteter Abgasanlage;
- Figur 2: einen typischen Verlauf einer Katalysatoraktivität eines NOₓ- Speicherkatalysators in Abhängigkeit von seiner Temperatur und
- Figur 3: ein Fließschema mit einem Verfahrensablauf gemäß einer vorteilhaften Ausgestaltung der Erfindung.

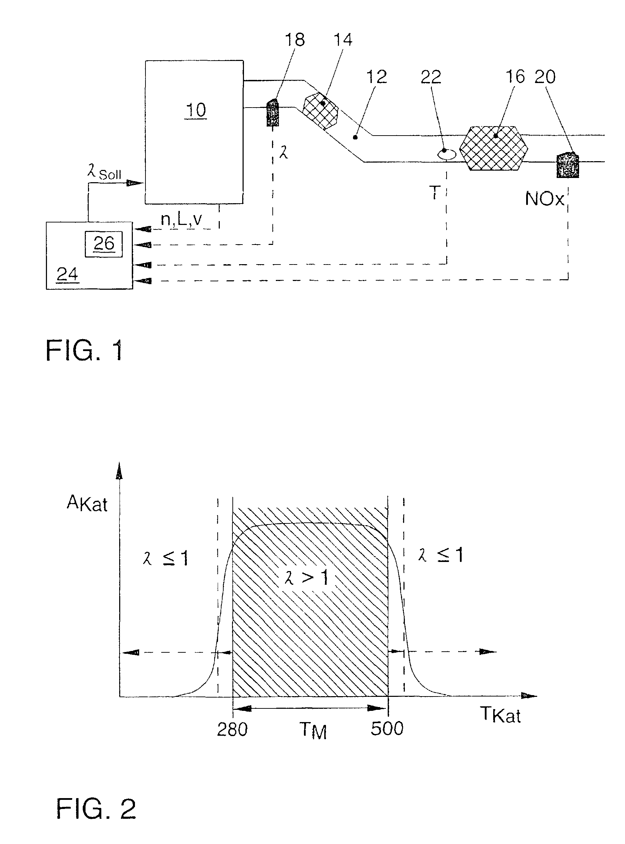

Bei der in Figur 1 dargestellten Verbrennungskraftmaschine 10 handelt es sich vorzugsweise um einen direkteinspritzenden Ottomotor. Ein von der Verbrennungskraftmaschine 10 erzeugtes Abgas wird durch einen Abgaskanal 12 geleitet, in dem ein Katalysatorsystem, bestehend aus einem Vorkatalysator 14, vorzugsweise einem 3-Wege-Katalysator, und einem NOₓ-Speicherkatalysator 16 als Hauptkatalysator, angeordnet ist. Im Abgaskanal 12 sind ferner verschiedene Sensoren angeordnet, die eine Steuerung der Verbrennungskraftmaschine 10 im Sinne der Einhaltung gesetzlich vorgeschriebener Emissionsgrenzwerte der unterschiedlichen Abgaskomponenten, insbesondere von unverbrannten Kohlenwasserstoffen HC, Kohlenmonoxid CO und Stickoxiden NOₓ, ermöglichen. Insbesondere erfolgt eine Regelung eines der Verbrennungskraftmaschine 10 zuzuführenden Luft-Kraftstoff-Gemisches auf eine Lambdasollvorgabe λ_{Soil} durch eine stromauf des Katalysatorsystems 14, 16 angeordnete Lambdasonde 18 (Lambdaregelung). Ferner wird eine NOₓ-Endemission (NOₓ-Durchbruch) mit Hilfe eines stromab des Speicherkatalysators 16 angeordneten NOₓ-Sensors 20 überwacht. Schließlich erfasst ein in Nähe des NOₓ-Speicherkatalysators 16 angeordneter Temperatursensor 22 eine Abgastemperatur, aus welcher eine Katalysatortemperatur des Speicherkatalysators 16 abgeleitet werden kann. Alternativ kann die Katalysatortemperatur auch in Abhängigkeit geeigneter Betriebsparameter der Verbrennungskraftmaschine 10 berechnet werden.

Alle Sensorsignale λ, T, NOₓ sowie verschiedene Betriebsparameter der Verbrennungskraftmaschine 10, insbesondere eine Drehzahl n, eine Motorlast L und eine Fahrzeuggeschwindigkeit v, finden Eingang in ein Motorsteuergerät 24, das in Abhängigkeit dieser Daten einen Betriebsmodus der Verbrennungskraftmaschine 10 steuert. Insbesondere erfolgt eine Vorgabe eines zulässigen Betriebsmodus (Magermodus oder stöchiometrisch/fetter Betriebsmodus) durch das Motorsteuergerät 24. Das Motorsteuergerät 24 umfasst eine Steuereinheit 26, in der ein Algorithmus zur Bestimmung eines zulässigen Magertemperaturbereiches in Abhängigkeit einer aktuellen Rohemission mindestens einer Abgaskomponente, im vorliegenden Beispiel von NOₓ, hinterlegt ist.

Figur 2 zeigt einen Plot einer Katalysatoraktivität A_{Kat} des NOₓ-Speicherkatalysators 16 in Abhängigkeit von seiner Katalysatortemperatur T_{Kat}. Es ist zu erkennen, dass die Katalysatoraktivität A_{Kat} einen glockenförmigen Verlauf mit zentralem Plateaubereich aufweist. Bei niedrigen Katalysatortemperaturen T_{Kat}, insbesondere unterhalb von etwa 200 °C, laufen die NOₓ-Einspeicher- und -Konvertierungsvorgänge mit so niedrigen Geschwindigkeiten ab, dass weder eine nennenswerte Einspeicherrate noch Reduktionsrate von NO_{X} zu beobachten ist. Oberhalb des Arbeitstemperaturfensters, insbesondere oberhalb von etwa 550 °C, findet wegen der thermischen Instabilität von Nitrat, der Einspeicherform von NOₓ, eine Dissoziation statt, so dass auch hier praktisch keine Speicherfähigkeit des NOₓ-Speicherkatalysators 16 vorliegt.

Der Magerbetrieb der Verbrennungskraftmaschine 10 wird gemäß herkömmlichen Verfahren daher nur in einem festgelegten Magertemperaturbereich T_{M} zugelassen, in dem der NOₓ₋Speicherkatalysator 16 eine ausreichend hohe Aktivität A_{Kat} hinsichtlich der Speicherung und Konvertierung von NOₓ aufweist. Zur Einhaltung strenger gesetzlicher Emissionsgrenzwerte, beispielsweise der Europäischen Abgasnorm EU IV, wird der Magerbetrieb typischerweise nur bei Katalysatortemperaturen T_{Kat} des Speicherkatalysators 16 von 280 bis 500 °C zugelassen. Selbstverständlich kann je nach Ausführung des Katalysators das Temperaturfenster von diesen Beispielwerten abweichen. Sobald die aktuelle Katalysatortemperatur außerhalb dieses Magertemperaturbereiches T_{M} liegt, muss der verbrauchsgünstige Magerbetrieb verlassen und unabhängig von einem Lastpunkt ein stöchiometrischer oder fetter Betriebsmodus mit λ ≤ 1 eingestellt werden. Es hat sich jedoch erwiesen, dass je nach tatsächlichem Fahrzustand (Drehzahl, Last, Geschwindigkeit) eine aktuelle NOₓ-Rohemission der Verbrennungskraftmaschine 10 so gering sein kann, dass die Einhaltung der Grenzwerte auch ohne Nachbehandlung des Abgases möglich ist. Erfindungsgemäß wird daher in Abhängigkeit aktueller Betriebsparameter n, L, v der Verbrennungskraftmaschine 10 beziehungsweise des Fahrzeuges die aktuelle NOₓ₋Rohemission ermittelt und mit zulässigen Endemissionen verglichen. Stellt sich dabei heraus, dass die vorzugsweise streckenbezogen ermittelte NOₓ-Rohemission unterhalb der gesetzlichen Grenzwerte liegt, so wird der Magertemperaturbereich T_{M} erweitert. Dabei kann diese Erweiterung stufenweise erfolgen (siehe vertikale gestrichelte Linien in Figur 2). Gemäß einer besonders vorteilhaften Variante des Verfahrens wird der Magerbetrieb unter den genannten Voraussetzungen sogar für alle Katalysatortemperaturen T_{Kat} des Speicherkatalysators 16 zugelassen, das heißt, der Magertemperaturbereich T_{M} wird praktisch grenzenlos erweitert.

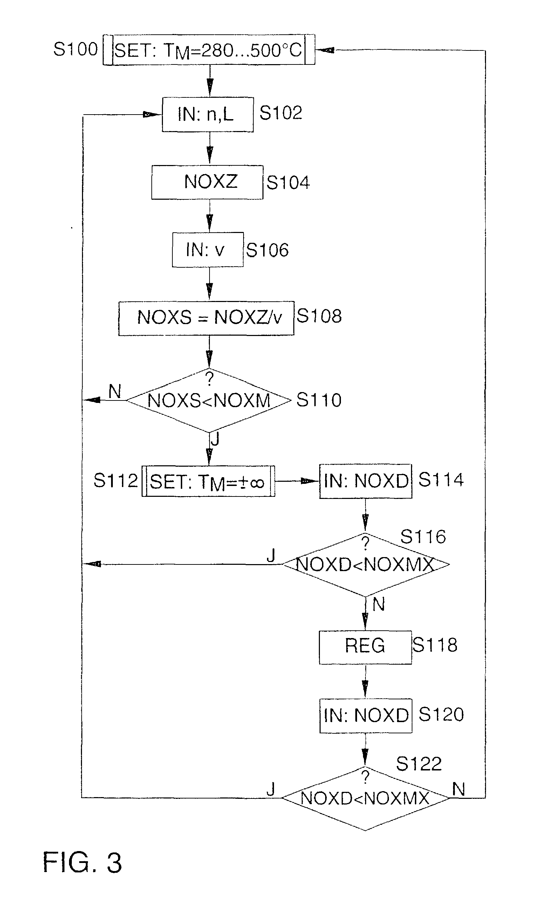

Der Ablauf des erfindungsgemäßen Verfahrens nach einer bevorzugten Ausführung wird durch das in Figur 3 gezeigte Fließschema deutlich. Das Verfahren wird in Schritt S100 initialisiert, wo der Magertemperaturbereich T_{M} zunächst derart festgelegt wird, dass betriebspunktunabhängig die Einhaltung gesetzlicher NOₓ-Grenzwerte sichergestellt ist. Typischerweise wird hier ein Magertemperaturbereich T_{M} von 280 bis 500 °C für eine Katalysatortemperatur des NOₓ-Speicherkatalysators 16 vorgegeben. Das Verfahren geht zu Schritt S102 über, wo die Motordrehzahl n sowie die Motorlast L in das Motorsteuergerät 24 eingelesen werden. In Abhängigkeit dieser Betriebsparameter wird in Schritt S104 eine zeitbezogene NOₓ-Rohemission NOXZ ermittelt, wobei üblicherweise abgespeicherte Last-Drehzahl-Kennfelder verwendet werden. Anschließend wird in Schritt S106 die aktuelle Fahrzeuggeschwindigkeit v eingelesen und in Schritt S108 durch Division der zeitbezogenen NOₓ-Rohemission NOXZ durch die Fahrzeuggeschwindigkeit v die streckenbezogene NOₓ₋Rohemission NOXS berechnet. Um im Falle eines Fahrzeugstillstandes eine Division durch Null zu vermeiden, ist an dieser Stelle eine hier nicht dargestellte Schleife vorgesehen, in der entweder das Verfahren so lange ausgesetzt wird, bis v einen positiven Wert einnimmt, oder v gleich einem geringen Wert gesetzt wird.

In der in Schritt S110 anschließenden Abfrage wird überprüft, ob die streckenbezogene NOₓ₋Rohemission NOXS kleiner ist als ein zulässiger gesetzlicher NOₓ-Grenzwert NOXMX. Wird diese Abfrage verneint, das heißt, die Rohemission NOXS übersteigt den Grenzwert NOXMX, so kann auf eine Speicherung und Konvertierung der emittierten Stickoxide durch den NOₓ-Speicherkatalysator 16 nicht verzichtet werden. Folglich wird der in Schritt S100 vorgegebene strenge Magertemperaturbereich von 280 bis 500 °C aufrecht erhalten. Das Verfahren geht in diesem Fall wieder zu Schritt S102 zurück, um in nachfolgenden Schleifen erneut die aktuelle streckenbezogene NOₓ-Rohemission NOXS zu überprüfen.

Wenn auf der anderen Seite die Abfrage in Schritt S110 bejaht wird, so bedeutet dies, dass auch ohne katalytische Abgasnachbehandlung durch den NOₓ-Speicherkatalysator 16 eine Einhaltung der Emissionsgrenzwerte möglich ist. In diesem Fall geht das Verfahren zu Schritt S112 über, wo der Magertemperaturbereich T_{M} neu festgelegt wird. Dabei erfolgt eine Erweiterung des Magertemperaturbereiches T_{M} gegenüber dem in Schritt S100 vorgegebenen Temperaturbereich T_{M}. Im hier dargestellten Beispiel wird der Magerbetrieb der Verbrennungskraftmaschine 10 für beliebige Katalysatortemperaturen T_{Kat} des Speicherkatalysators 16 freigegeben, das heißt, der Magertemperaturbereich T_{M} erstreckt sich über Katalysatortemperaturen vom Nullpunkt bis + ∞. Ebenso kann auch eine stufenweise Erweiterung des Magertemperaturbereichs T_{M} in Abhängigkeit der Abweichung der streckenbezogenen NOₓ-Rohemission NOXS von der zulässigen NOₓ-Endemission NOXMX erfolgen, wobei bei geringen Abweichungen beispielsweise T_{M} auf 250 bis 530 °C festgelegt wird. Im Ergebnis kann somit der Magerbetrieb gegenüber herkömmlichen Verfahren auf weitere Betriebsbereiche ausgedehnt werden. Hierdurch lassen sich bei Einhaltung aller gesetzlicher Emissionsgrenzwerte deutliche Kraftstoffeinsparungen erzielen.

Nach Freigabe des Magerbetriebs für alle Katalysatortemperaturen in Schritt S112 schließt besonders vorteilhaft eine Routine an (Schritt S114 bis S122), durch die eine Überwachung der Schadstoffendemission stromab des Katalysatorsystems 14, 16 erfolgt. Diese Routine stellt eine Auffangmaßnahme zur Verhinderung von Schadstoffdurchbrüchen dar, falls die Freigabe des Magerbetriebs in Schritt S112 aufgrund etwaiger Unzulänglichkeiten oder Ungenauigkeiten der Bestimmung der Rohemission NOXS unzutreffend erfolgt.

Die Kontrollroutine startet in Schritt S114, wo ein mit Hilfe des NOₓ-Sensors 20 detektierter NOₓ-Durchbruch (NOₓ-Endemission) NOXD in das Motorsteuergerät 24 eingelesen wird. Anschließend erfolgt in Schritt S116 ein Abgleich des NOₓ-Durchbruches NOXD mit der zulässigen NOₓ-Endemission NOXMX. Alternativ kann hier auch ein Abgleich des NOₓ₋Durchbruches NOXD mit der in Schritt S108 ermittelten streckenbezogenen NOₓ₋Rohemission NOXS erfolgen. Ist der NOₓ-Durchbruch NOXD kleiner als der Grenzwert NOXMS, bleibt der in Schritt S112 definierte Magertemperaturbereich T_{M} unverändert und das Verfahren geht zurück zu Schritt S102.

Ergibt die Abfrage in Schritt S116 andererseits kritische beziehungsweise nicht akzeptable Emissionsendwerte, so geht das Verfahren zu Schritt S118 über, wo zunächst eine NOₓ₋Regeneration des NOₓ-Speicherkatalysators 16 durchgeführt wird, um zu überprüfen, ob die zu hohen NOₓ-Durchbrüche NOXD auf einer erschöpften NOₓ-Speicherkapazität des Speicherkatalysators 16 beruhen. Die NOₓ-Regeneration wird in bekannter Weise durch Beaufschlagung des Speicherkatalysators 16 mit einer leicht fetten Abgasatmosphäre (λ < 1) durchgeführt. Dabei wird das eingespeicherte NOₓ aus dem Speicher freigesetzt und durch die nunmehr im Abgas überschüssig vorhandenen Reduktionsmittel (HC, CO) reduziert. Anschließend wird in Schritt S120 erneut der aktuelle NOₓ-Durchbruch NOXD durch den NOₓ-Sensor 20 erfasst, in das Motorsteuergerät 24 eingelesen und in Schritt S122 erneut mit dem zulässigen Grenzwert für die NOₓ-Endemission NOXMX verglichen. Wird hierbei festgestellt, dass nunmehr der NOₓ-Durchbruch NOXD unterhalb des Grenzwertes NOXMX liegt, geht das Verfahren unter Beibehaltung des in Schritt S112 festgesetzten Magertemperaturbereiches T_{M} zu Schritt S102 zurück, wo der gesamte Zyklus neu beginnt. In diesem Fall kann davon ausgegangen werden, dass die in Schritt S116 festgestellte Desaktivierung des NOₓ-Speicherkatalysators 16 lediglich Folge des aufgefüllten NOₓ₋Speichers war.

Ergibt hingegen die Abfrage in Schritt S122 wiederum einen zu hohen NOₓ-Durchbruch NOXD, muss von einer fehlerhaften, das heißt zu großzügigen, Festsetzung des Magertemperaturbereiches T_{M} ausgegangen werden. Daher geht das Verfahren in diesem Fall zu Schritt S100 zurück, wo der Magertemperaturbereich T_{M} wieder auf den ursprünglichen engen Bereich von beispielsweise 280 bis 500 °C festgesetzt wird.

Die Festlegung des Magertemperaturbereiches T_{M} in den Schritten S100 beziehungsweise S112 bedeutet keine unmittelbare Einstellung des Magerbetriebs der Verbrennungskraftmaschine 10. Vielmehr wird hier lediglich der Temperaturbereich des Katalysators vorgegeben, in dem ein Magerbetrieb überhaupt zulässig ist. Die tatsächliche Einstellung des Magerbetriebes erfolgt erst dann, wenn der Betriebspunkt des Fahrzeuges einen Magerbetrieb erlaubt (üblicherweise im Teil- und Volllastbetrieb) und wenn die Katalysatortemperatur T_{Kat} innerhalb des Magertemperaturbereiches T_{M} liegt. Die Kontrollroutine in Schritt S114 bis Schritt S122 wird sinnvollerweise nur während eines tatsächüch eingestellten Magerbetriebes der Verbrennungskraftmaschine 10 durchgeführt.

### BEZUGSZEICHENLISTE

- 10: Verbrennungskraftmaschine
- 12: Abgaskanal
- 14: Vorkatalysator
- 16: NOₓ-Speicherkatalysator
- 18: Lambdasonde
- 20: NO_{X}-Sensor
- 22: Temperatursensor
- 24: Motorsteuergerät
- 26: Steuereinheit

- λ: Luft-Kraftstoff-Verhältnis
- A_{Kat}: Katalysatoraktivität
- L: Motorlast
- n: Motordrehzahl
- NOXD: NO_{X}-Endemission (NOₓ-Durchbruch)
- NOXMX: zulässige NOₓ-Endemission
- NOXS: streckenbezogene NOₓ-Rohemission
- NOXZ: zeitbezogene NOₓ-Rohemission
- T_{Kat}: Katalysatortemperatur
- T_{M}: Magertemperaturbereich
- v: Fahrzeuggeschwindigkeit

- S100: Initialisierung, Vorgabe Magertemperaturbereich
- S102: Einlesen Motordrehzahl und Motorlast
- S104: Ermittlung zeitbezogene NOₓ-Rohemission
- S106: Einlesen aktuelle Fahrzeuggeschwindigkeit
- S108: Berechnung streckenbezogene NOₓ-Rohemission
- S110: Abfrage
- S112: Festlegung Magertemperaturbereich
- S114: Einlesen NOₓ-Durchbruch
- S116: Abfrage
- S118: Durchführung NOₓ-Regeneration des NOₓ-Speicherkatalysators
- S120: Einlesen NOₓ-Durchbruch
- S122: Abfrage

## Patentansprüche

1. Verfahren zur Steuerung einer magerlauffähigen Verbrennungskraftmaschine (10) zum Antrieb eines Fahrzeuges mit mindestens einem nachgeschalteten Katalysator (14, 16), wobei ein Magerbetrieb der Verbrennungskraftmaschine (10) mit λ > 1 innerhalb eines, durch eine obere und eine untere Grenztemperatur begrenzten zulässigen Magertemperaturbereichs (T_{M}) für eine Katalysatortemperatur des mindestens einen Katalysators (14, 16) zugelassen wird, **dadurch gekennzeichnet, dass** eine aktuelle Rohemission mindestens einer Abgaskomponente der Verbrennungskraftmaschine (10) ermittelt wird und die obere und die untere Grenztemperatur des zulässigen Magertemperaturbereichs (T_{M}) in Abhängigkeit von der Rohemission der mindestens einen Abgaskomponente bestimmt wird.

2. Verfahren nach Anspruch 1, **dadurch gekennzeichnet, dass** in Abhängigkeit einer Fahrzeuggeschwindigkeit (v) eine aktuelle streckenbezogene Rohemission ermittelt wird und der zulässige Magertemperaturbereich (T_{M}) in Abhängigkeit der streckenbezogenen Rohemission der mindestens einen Abgaskomponente bestimmt wird.

3. Verfahren nach Anspruch 1 oder 2, **dadurch gekennzeichnet, dass** die mindestens eine Abgaskomponente Stickoxid (NOₓ) und mindestens ein Katalysator (14, 16) ein NOₓ-Speicherkatalysator (16) ist.

4. Verfahren nach einem der vorhergehenden Ansprüche, **dadurch gekennzeichnet, dass** der zulässige Magertemperaturbereich (T_{M}) erweitert wird, wenn die Rohemission der mindestens einen Abgaskomponente unterhalb eines vorgebbaren streckenbezogenen Grenzwertes für diese Abgaskomponente liegt.

5. Verfahren nach Anspruch 4, **dadurch gekennzeichnet, dass** der Magerbetrieb der Verbrennungskraftmaschine (10) für beliebige Katalysatortemperaturen (T_{Kat}) zugelassen wird, wenn die Rohemission der mindestens einen Abgaskomponente unterhalb eines vorgebbaren streckenbezogenen Grenzwertes für diese Abgaskomponente liegt.

6. Verfahren nach einem der vorhergehenden Ansprüche, **dadurch gekennzeichnet, dass** die aktuelle Rohemission der mindestens einen Abgaskomponente gemessen oder in Abhängigkeit aktueller Betriebsparameter der Verbrennungskraftmaschine (10), insbesondere von einer Drehzahl (n) und/oder einer Last (L), ermittelt wird.

7. Verfahren nach einem der vorhergehenden Ansprüche, **dadurch gekennzeichnet, dass** die aktuelle Rohemission der Verbrennungskraftmaschine (10) der mindestens einen Abgaskomponente für eine vorgebbare Fahrstrecke oder ein vorgebbares Zeitintervall hochgerechnet wird.

8. Verfahren nach einem der vorhergehenden Ansprüche, **dadurch gekennzeichnet, dass** die Verbrennungskraftmaschine (10) schichtladefähig ist und der Magerbetrieb wahlweise in einem Schichtlademodus oder einem Homogenmodus erfolgen kann und für diese Magerbetriebsmodi unterschiedliche zulässige Magertemperaturbereiche in Abhängigkeit der aktuellen Rohemission mindestens einer Abgaskomponente bestimmt werden.

9. Verfahren nach einem der vorhergehenden Ansprüche, **dadurch gekennzeichnet, dass** stromab des mindestens einen Katalysators (14, 16) eine Endemission der mindestens einen Abgaskomponente erfasst wird und in Abhängigkeit der Endemission dieser Abgaskomponente der Magertemperaturbereich (T_{M}) korrigiert werden kann.

10. Vorrichtung zur Steuerung einer magerlauffähigen Verbrennungskraftmaschine (10) zum Antrieb eines Fahrzeuges mit mindestens einem nachgeschalteten Katalysator (14, 16), wobei ein Magerbetrieb der Verbrennungskraftmaschine (10) mit λ > 1 innerhalb eines, durch eine obere und eine untere Grenztemperatur begrenzten zulässigen Magertemperaturbereichs (T_{M}) für eine Katalysatortemperatur des mindestens einen Katalysators (14, 16) zulässig ist, **gekennzeichnet durch** Mittel, mit denen die Verfahrensschritte Ermittlung einer aktuellen Rohemission mindestens einer Abgaskomponente der Verbrennungskraftmaschine (10) und Bestimmung der oberen und der unteren Grenztemperatur des zulässigen Magertemperaturbereichs (T_{M}) in Abhängigkeit der aktuellen Rohemission durchführbar sind.

11. Vorrichtung nach Anspruch 10, **dadurch gekennzeichnet, dass** die Mittel eine Steuereinheit (26) umfassen, in der ein Algorithmus zur Steuerung der Verfahrensschritte gespeichert ist.

12. Vorrichtung nach Anspruch 11, **dadurch gekennzeichnet, dass** die Steuereinheit (26) in ein Motorsteuergerät (24) integriert ist.

13. Vorrichtung nach einem der Ansprüche 10 bis 12, **dadurch gekennzeichnet, dass** die Mittel ein Mittel zur Bestimmung der Fahrzeuggeschwindigkeit (v) umfassen.

## Claims

1. Method for controlling an internal combustion engine (10) which is capable of lean-burn operation and is used to drive a vehicle with at least one downstream catalytic converter (14, 16), a lean-burn operation of the internal combustion engine (10) with λ > 1 being permissible within a permissible lean-burn temperature range (T_{M}), which is delimited by an upper limit temperature and a lower limit temperature, for a catalytic converter temperature of the at least one catalytic converter (14, 16), **characterized in that** a current untreated emission of at least one exhaust-gas component from the internal combustion engine (10) is determined, and the upper and lower limit temperatures of the permissible lean-burn temperature range (T_{M}) are determined as a function of the untreated emission of the at least one exhaust-gas component.

2. Method according to Claim 1, **characterized in that** a current distance-based untreated emission is determined as a function of a vehicle velocity (v), and the permissible lean-burn temperature range (T_{M}) is determined as a function of the distance-based untreated emission of the at least one exhaust-gas component.

3. Method according to Claim 1 or 2, **characterized in that** the at least one exhaust-gas component is nitrogen oxide (NOₓ) and at least one catalytic converter (14, 16) is an NOₓ storage catalytic converter (16).

4. Method according to one of the preceding claims, **characterized in that** the permissible lean-burn temperature range (T_{M}) is widened if the untreated emission of the at least one exhaust-gas component is below a predeterminable distance-based limit value for this exhaust-gas component.

5. Method according to Claim 4, **characterized in that** the lean-burn operation of the internal combustion engine (10) is permitted for any desired catalytic converter temperatures (T_{cat}) if the untreated emission of the at least one exhaust-gas component is below a predeterminable distance-based limit value for this exhaust-gas component.

6. Method according to one of the preceding claims, **characterized in that** the current untreated emission of the at least one exhaust-gas component is measured or is determined as a function of current operating parameters of the internal combustion engine (10), in particular of an engine speed (n) and/or a load (L).

7. Method according to one of the preceding claims, **characterized in that** the current untreated emission from the internal combustion engine (10) of the at least one exhaust-gas component is extrapolated for a predeterminable driving distance or a predeterminable time interval.

8. Method according to one of the preceding claims, **characterized in that** the internal combustion engine (10) is capable of stratified-charge operation, and the lean-burn operation can optionally take place in a stratified-charge mode or a homogeneous mode, and different permissible lean-burn temperature ranges are determined for these lean-burn operating modes as a function of the current untreated emission of at least one exhaust-gas component.

9. Method according to one of the preceding claims, **characterized in that** a final emission of the at least one exhaust-gas component is recorded downstream of the at least one catalytic converter (14, 16), and the lean-burn temperature range (T_{M}) can be corrected as a function of the final emission of this exhaust-gas component.

10. Apparatus for controlling an internal combustion engine (10) which is capable of lean-burn operation, for driving a vehicle with at least one downstream catalytic converter (14, 16), a lean-burn operation of the internal combustion engine (10) with λ > 1 being permissible within a permissible lean-burn temperature range (T_{M}), which is delimited by an upper limit temperature and a lower limit temperature, for a catalytic converter temperature of the at least one catalytic converter (14, 16), **characterized by** means which can be used to carry out the method steps of determining a current untreated emission of at least one exhaust-gas component from the internal combustion engine (10) and determining the upper and lower limit temperatures of the permissible lean-burn temperature range (T_{M}) as a function of the current untreated emission.

11. Apparatus according to Claim 10, **characterized in that** the means comprise a control unit (26) in which an algorithm for controlling the method steps is stored.

12. Apparatus according to Claim 11, **characterized in that** the control unit (26) is integrated in an engine control unit (24).

13. Apparatus according to one of Claims 10 to 12, **characterized in that** the means comprise a means for determining the vehicle velocity (v).

## Revendications

1. Procédé de commande d'un moteur à combustion interne (10) pouvant fonctionner avec un mélange pauvre pour l'entraînement d'un véhicule comprenant au moins un catalyseur monté en aval (14, 16), un fonctionnement en mélange pauvre du moteur à combustion interne (10) avec λ > 1 étant autorisé à l'intérieur d'une plage de température de mélange pauvre (T_{M}) admissible limitée par une température limite supérieure et inférieure pour une température de catalyseur de l'au moins un catalyseur (14, 16), **caractérisé en ce qu'**une émission brute effective d'au moins un composant des gaz d'échappement du moteur à combustion interne (10) est détectée et la température limite supérieure et inférieure de la plage de température de mélange pauvre (T_{M}) admissible est déterminée en fonction de l'émission brute de l'au moins un composant des gaz d'échappement.

2. Procédé selon la revendication 1, **caractérisé en ce qu'**une émission brute effective rapportée à la distance est détectée en fonction de la vitesse du véhicule (v) et la plage de température de mélange pauvre (T_{M}) admissible est déterminée en fonction de l'émission brute rapportée à la distance de l'au moins un composant des gaz d'échappement.

3. Procédé selon la revendication 1 ou 2, **caractérisé en ce que** l'au moins un composant des gaz d'échappement est de l'oxyde d'azote (NOₓ) et l'au moins un catalyseur (14, 16) est un catalyseur d'accumulation de NOₓ (16).

4. Procédé selon l'une quelconque des revendications précédentes, **caractérisé en ce que** la plage de température de mélange pauvre (T_{M}) admissible est élargie lorsque l'émission brute de l'au moins un composant des gaz d'échappement est en dessous d'une valeur limite prédéfinissable rapportée à la distance pour ce composant des gaz d'échappement.

5. Procédé selon la revendication 4, **caractérisé en ce que** le fonctionnement en mélange pauvre du moteur à combustion interne (10) est autorisé pour des températures de catalyseur (T_{Kat}) quelconques, lorsque l'émission brute de l'au moins un composant des gaz d'échappement se situe en dessous d'une valeur limite prédéterminée rapportée à la distance pour ce composant des gaz d'échappement.

6. Procédé selon l'une quelconque des revendications précédentes, **caractérisé en ce que** l'émission brute effective de l'au moins un composant des gaz d'échappement est mesurée ou est détectée en fonction de paramètres de fonctionnement effectifs du moteur à combustion interne (10), notamment d'une vitesse (n) et/ou d'une charge (L).

7. Procédé selon l'une quelconque des revendications précédentes, **caractérisé en ce que** l'émission brute effective de l'au moins un composant des gaz d'échappement du moteur à combustion interne (10) est extrapolée pour une distance de conduite prédéfinissable ou un intervalle de temps prédéfinissable.

8. Procédé selon l'une quelconque des revendications précédentes, **caractérisé en ce que** le moteur à combustion interne (10) est capable de charge stratifiée et le fonctionnement en mélange pauvre peut avoir lieu au choix dans un mode de charge stratifiée ou dans un mode homogène et pour ces modes de fonctionnement en mélange pauvre, différentes plages de température de mélange pauvre admissibles sont déterminées en fonction de l'émission brute effective d'au moins un composant des gaz d'échappement.

9. Procédé selon l'une quelconque des revendications précédentes, **caractérisé en ce qu'**une émission finale de l'au moins un composant des gaz d'échappement est détectée en aval de l'au moins un catalyseur (14, 16) et la plage de température de mélange pauvre (T_{M}) peut être corrigée en fonction de l'émission finale de ce composant des gaz d'échappement.

10. Dispositif de commande d'un moteur à combustion interne (10) pouvant fonctionner avec un mélange pauvre pour l'entraînement d'un véhicule comprenant au moins un catalyseur monté en aval (14, 16), un fonctionnement en mélange pauvre du moteur à combustion interne (10) avec λ > 1 étant autorisé à l'intérieur d'une plage de température de mélange pauvre (T_{M}) admissible limitée par une température limite supérieure et inférieure pour une température de catalyseur de l'au moins un catalyseur (14, 16), **caractérisé par** des moyens avec lesquels les étapes de procédé de détection d'une émission brute effective d'au moins un composant des gaz d'échappement du moteur à combustion interne (10) et de détermination de la température limite supérieure et inférieure de la plage de température de mélange pauvre (T_{M}) admissible en fonction de l'émission brute effective peuvent être mises en oeuvre.

11. Dispositif selon la revendication 10, **caractérisé en ce que** les moyens comprennent une unité de commande (26), dans laquelle un algorithme de commande des étapes de procédé est enregistré.

12. Dispositif selon la revendication 11, **caractérisé en ce que** l'unité de commande (26) est intégrée dans un appareil de commande du moteur (24).

13. Dispositif selon l'une quelconque des revendications 10 à 12, **caractérisé en ce que** les moyens comprennent un moyen pour déterminer la vitesse du véhicule (v).
